# EUROPEAN PATENT APPLICATION

(11) **EP 4 503 724 A1**
(43) Date of publication of application: **05.02.2025**
(21) Application number: 23778946.6
(22) Date of filing: 14.02.2023
(51) Int. Cl.: H04W 28/06, H04W 72/0446, H04W 72/0453

(54) **BASE STATION, TERMINAL AND COMMUNICATION METHOD**

(30) Priority: 30.03.2022 JP 2022056365
(71) Applicant: Panasonic Intellectual Property Corporation of America, Torrance, CA 90504 (US)
(72) Inventor: NUNOME, Tomoya, Kadoma-shi, Osaka 571-0057 (JP); SUZUKI, Hidetoshi, Kadoma-shi, Osaka 571-0057 (JP); KUANG, Quan, 63225 Langen (DE)
(74) Representative: Grünecker Patent- und Rechtsanwälte PartG mbB
(86) International application number: PCT/JP2023/005049
(87) International publication number: WO 2023/188912

(57) **Abstract**

This base station comprises: a control circuit that determines the settings of transmission directions in each of a plurality of time resources in a unit section, said settings including the settings of different transmission directions in the same time resource; and a transmission circuit that transmits a control signal including information related to the settings.

## Description

### Technical Field

The present disclosure relates to a base station, a terminal, and a communication method.

### Background Art

In 3rd Generation Partnership Project (3GPP), the specification of the PHY layer in Release 17 New Radio access technology (NR) has been completed as functional extension of 5th Generation mobile communication systems (5G). NR supports functions for realizing Ultra Reliable and Low Latency Communication (URLLC) in addition to enhanced Mobile Broadband (eMBB) to satisfy requirements of high speed and high capacity (see, e.g., Non-Patent Literatures (hereinafter referred to as "NPLs") 1 to 5).

### Citation List

### Non-Patent Literature

NPL 1
   3GPP TS 38.211 V17.0.0, "NR; Physical channels and modulation (Release 17)," December 2021
NPL 2
   3GPP TS 38.212 V17.0.0, "NR; Multiplexing and channel coding (Release 17)," December 2021
NPL 3
   3GPP TS 38.213 V17.0.0, "NR; Physical layer procedure for control (Release 17)," December 2021
NPL4
   3GPP TS 38.214 V17.0.0, "NR; Physical layer procedures for data (Release 17)," December 2021
NPL5
   3GPP TS 38.215 V17.0.0, "NR; Physical layer measurements (Release 17)," December 2021 NPL 6
   3GPP TS 38.331 V16.7.0, "NR; Radio Resource Control (RRC) protocol specification (Release 16)", December 2021

### Summary of Invention

However, there is room for further study on an indication method for indicating resource allocation in a radio communication.

One non-limiting and exemplary embodiment of the present disclosure facilitates providing a base station, a terminal, and a communication method capable of improving efficiency of indication of resource allocation.

A base station according to one exemplary embodiment of the present disclosure includes: control circuitry, which, in operation, determines a configuration of a transmission direction for each of a plurality of time resources in a unit period, the configuration including configurations of the transmission direction different for the same time resource; and transmission circuitry, which, in operation, transmits a control signal including information on the configuration.

It should be noted that general or specific embodiments may be implemented as a system, an apparatus, a method, an integrated circuit, a computer program, a storage medium, or any selective combination thereof.

According to an exemplary embodiment of the present disclosure, it is possible to improve efficiency of indication of resource allocation.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates examples of a duplex system;
FIG. 2 illustrates an example of a resource block (RB) set;
FIG. 3 illustrates an example of a slot format;
FIG. 4 illustrates an example of an indication using downlink control information (DCI) format 2_0 in NR-unlicensed (NR-U);
FIG. 5 is a block diagram illustrating an exemplary configuration of a part of a base station;
FIG. 6 is a block diagram illustrating an exemplary configuration of a part of a terminal;
FIG. 7 is a block diagram illustrating an exemplary configuration of the base station;
FIG. 8 is a block diagram illustrating an exemplary configuration of the terminal;
FIG. 9 is a sequence diagram illustrating exemplary operations of the base station and the terminal;
FIG. 10 illustrates exemplary configurations of a Slot format indicator (SFI) field;
FIG. 11 illustrates examples of a slot format combination;
FIG. 12 illustrates examples of a slot format combination;
FIG. 13 illustrates exemplary configurations of a guard band;
FIG. 14 illustrates an exemplary architecture of a 3GPP NR system;
FIG. 15 is a schematic diagram illustrating functional split between Next Generation-Radio Access Network (NG-RAN) and 5th Generation Core (5GC);
FIG. 16 is a sequence diagram of a Radio Resource Control (RRC) connection setup/reconfiguration procedure;
FIG. 17 is a schematic diagram illustrating usage scenarios of enhanced Mobile BroadBand (eMBB), massive Machine Type Communications (mMTC), and Ultra Reliable and Low Latency Communications (URLLC); and
FIG. 18 is a block diagram illustrating an exemplary 5G system architecture for a non-roaming scenario.

### Description of Embodiments

Hereinafter, embodiments of the present disclosure will be described in detail with reference to the accompanying drawings.

### [Cross Division Duplex (XDD)]

"Study on evolution of NR duplex operation" was approved as a Study Item for Release 18. One of the main topics of the Study Item is the support for subband nonoverlapping full duplex (also referred to as Cross Division Duplex (XDD)).

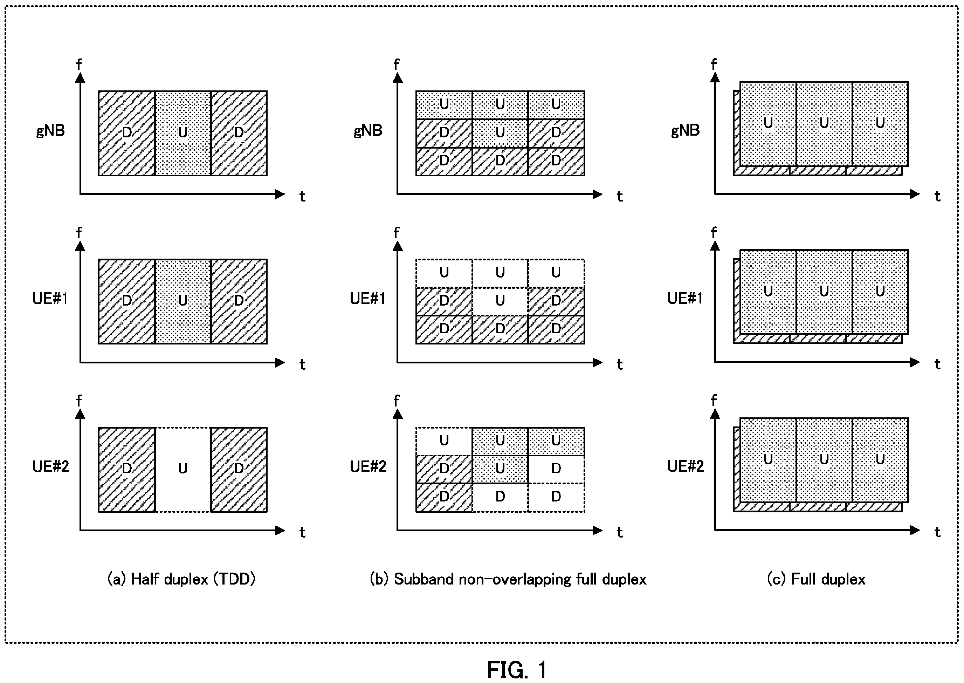

Parts (a) to (c) in FIG. 1 illustrate examples of a Duplex system. In parts (a) to (c) in FIG. 1, the vertical axis represents frequency, and the horizontal axis represents time. Further, "U" indicates uplink transmission and "D" indicates downlink transmission in parts (a) to (c) in FIG. 1.

Part (a) in FIG. 1 illustrates an example of Time Division Duplex (TDD) in half duplex. In part (a) in FIG. 1, terminal (for example, also referred to as user equipment (UE)) #1 and UE#2 are terminals connected to a base station (for example, also referred to as gNB). For example, the base station may determine the transmission direction (for example, downlink or uplink) for each time resource and indicate it to the terminal. Note that there may be a case where a terminal does not use a resource in the transmission direction in a certain time resource (for example, a resource indicated by a broken line in parts (a) to (c) in FIG. 1). In the half duplex illustrated in part (a) in FIG. 1, the transmission direction in a certain time resource may be common among terminals. For example, the transmission direction is not different between terminals in a certain time resource. For example, in a time resource in which UE#1 performs uplink transmission, UE#2 does not perform downlink reception.

Part (b) in FIG. 1 illustrates an example of XDD. In XDD, a frequency resource (or frequency band) is divided into multiple bands (for example, subbands), and transmission in different directions (for example, downlink or uplink) on a subband-by-subband basis is supported. Note that, in XDD, a terminal performs either uplink or downlink transmission and reception in a certain time resource, and does not perform transmission and reception of the other. In contrast, in XDD, the base station can simultaneously transmit and receive both the uplink and the downlink.

Part (c) in FIG. 1 illustrates an example of Overlapping full duplex (simply referred to as full duplex). In full duplex, both the base station and the terminal can simultaneously transmit and receive the uplink and the downlink in frequency and time resources.

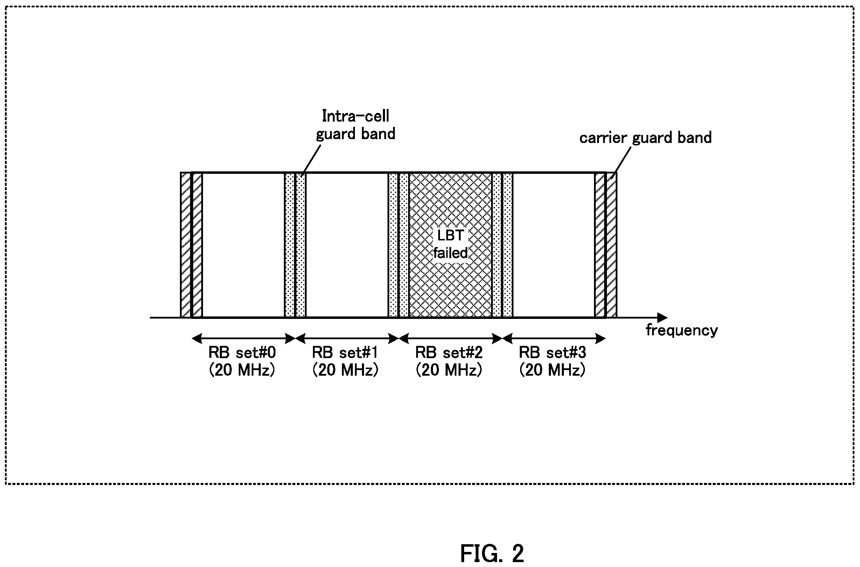

Here, as illustrated in part (b) in FIG. 1, the frequency resource may be divided to realize XDD. Here, one of the methods for dividing a frequency resource in an existing standard is the resource block (RB) set. For example, in NR-U of Release 16 (hereinafter, Rel. 16), an RB set was introduced to divide the band in accordance with a carrier sensing (for example, Listen Before Talk (LBT)), with the band having a bandwidth of, for example, 20 MHz. FIG. 2 illustrates an example of an RB set in an unlicensed band of frequency range 1 (FR1). In the example illustrated in FIG. 2, an 80 MHz band is divided into four RB sets (RB sets #0 to #3), each having a 20 MHz bandwidth.

For example, in FIG. 2, utilization by different radio systems is also assumed for each of the plurality of RB sets. For this reason, as illustrated in FIG. 2, a guard band (for example, an intra-cell guard band) may be placed between RB sets. By placing the guard band in this manner, cross link interference (CLI) can be reduced.

For example, the method for realizing XDD using an RB set has not been thoroughly examined.

In a non-limiting embodiment of the present disclosure, a method for realizing XDD using an RB set is described, for example.

### [About Slot format]

For example, the transmission direction of each symbol in the slot can be set according to the Slot format.

In the slot format, for example, Downlink (DL), Uplink (UL), and Flexible can be configured. Flexible can be used to overwrite either Downlink or Uplink, for example.

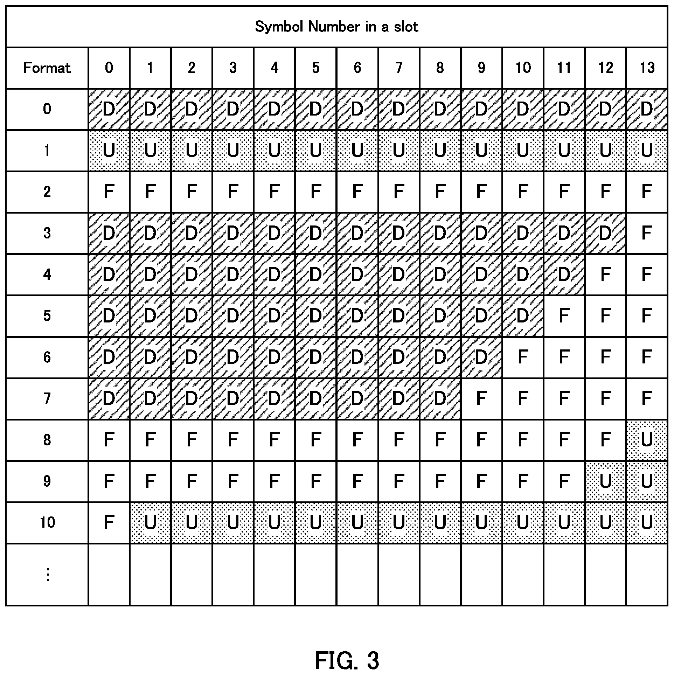

FIG. 3 illustrates an example of a Slot format. In FIG. 3, "D" represents Downlink, "U" represents Uplink, and "F" represents Flexible. Note that the Slot format illustrated in FIG. 3 is an example, and a Slot format that is not defined in FIG. 3 may be applied. The Slot format may indicate the configuration of the transmission direction (for example, any of D, U, and F) for each of a plurality of symbols (for example, time resources) in the slot (for example, the unit period).

For example, the Slot format applied by the terminal may be indicated to the terminal via a downlink control channel (for example, DCI format 2_0). In DCI format 2_0, for example, a "Slot format indicator (SFI)" (or Slot format combination) that configures the Slot formats of a plurality of slots may be indicated to the terminal.

For example, in Rel. 16 NR-U, the same Slot format is applied to multiple available RB sets. Here, the term "available" means a state in which an RB set is available for transmission and/or reception, for example, as a result of LBT implementation. Further, DCI format 2_0 is, for example, capable of indicating the available RB set and the channel occupancy time duration (COT duration).

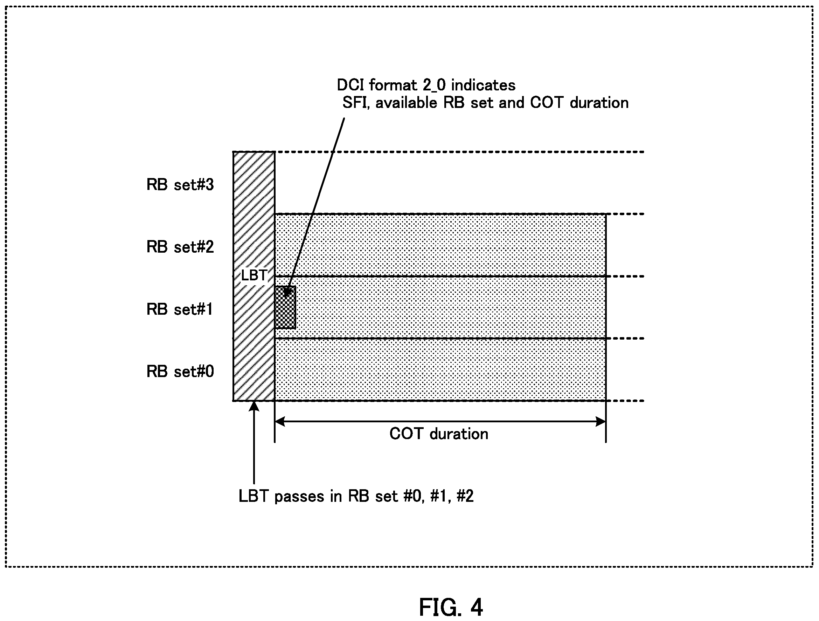

FIG. 4 illustrates an example of an indication in DCI format 2_0 of NR-U. In the example illustrated in FIG. 4, four RB sets (RB sets #0 to #3) are included in the system band.

For example, as shown in FIG. 4, the base station executes LBT and determines that RB sets #0, #1, and #2 are available. Then, the base station may transmit DCI format 2_0 and indicate the SFI, available RB sets (for example, RB sets #0, #1, #2), and the COT length to the terminal. In this case, the Slot format indicated by SFI is commonly applied to multiple available RB sets (for example, RB sets #0, #1, and #2).

As described above, the Slot format applied to the terminal is common across a plurality of RB sets that are available for the terminal. In XDD, on the other hand, the transmission direction may differ between subbands. For this reason, for example, when the RB set is applied to XDD, the Slot format may differ between RB sets.

Note that the transmission direction of a symbol (for example, Downlink or Uplink) may be configured for a terminal by signaling from a higher layer (for example, TDD UL/DL configuration). In a quasi-static configuration for transmission direction through signaling in a higher layer, Slot format is not used, but Downlink, Uplink, and Flexible can be set in the same manner as Slot format. For example, the transmission direction can be overwritten with a Slot format indicated by DCI format 2_0 for a symbol configured to be Flexible by signaling in a higher layer (or a symbol configured with no transmission direction in any case).

The Slot format may be used, for example, to indicate whether transmission by the terminal is permissible. For example, in a transmission method or a reception method where time and frequency resources are configured in advance by higher layer signaling, whether the terminal actually performs transmission or reception may be determined based on the transmission direction indicated by the Slot format. For example, in the case of Uplink transmission with the Configured grant, the terminal does not perform transmission if the symbol to be used for the transmission is not Uplink in the Slot format (for example, also referred to as an Uplink symbol). For this reason, in a case where a plurality of RB sets is allocated to a terminal, the transmission direction may vary for each RB set (or subband), and thus, the terminal may not be able to determine whether to transmit or not without identifying an individual Slot format for each RB set.

In the present embodiment, a method for configuring a Slot format individual to an RB set will be described.

Note that the transmission method in which the time and frequency resources are configured in advance may be a transmission method in which the time and frequency resources are configured quasi-statically by a downlink control channel (for example, PDCCH: Physical Downlink Control Channel), a downlink shared channel (PDSCH: Physical Downlink Shared Channel), or a channel state information reference signal (CSI-RS: Channel State Information Reference Signal). Further, a reception method in which the time and frequency resources are quasi-statically configured in advance may be a reception method in which the time and frequency resources are configured by, for example, a sounding reference signal (SRS), an uplink control channel (for example, Physical Uplink Control Channel (PUCCH)), an uplink shared channel (for example, Physical Uplink Shared Channel (PUSCH)), or a random access channel (for example, Physical Random Access Channel (PRACH)).

### [Overview of Communication System]

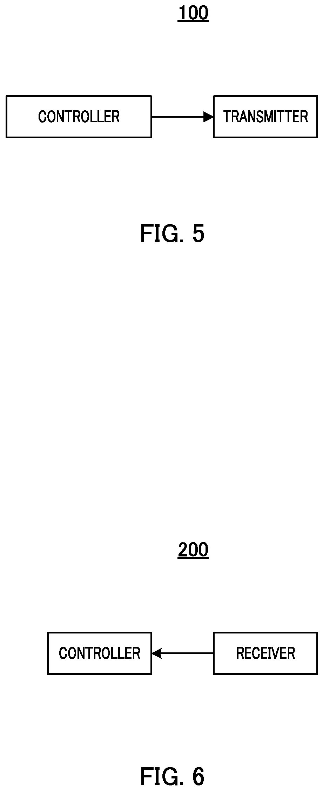

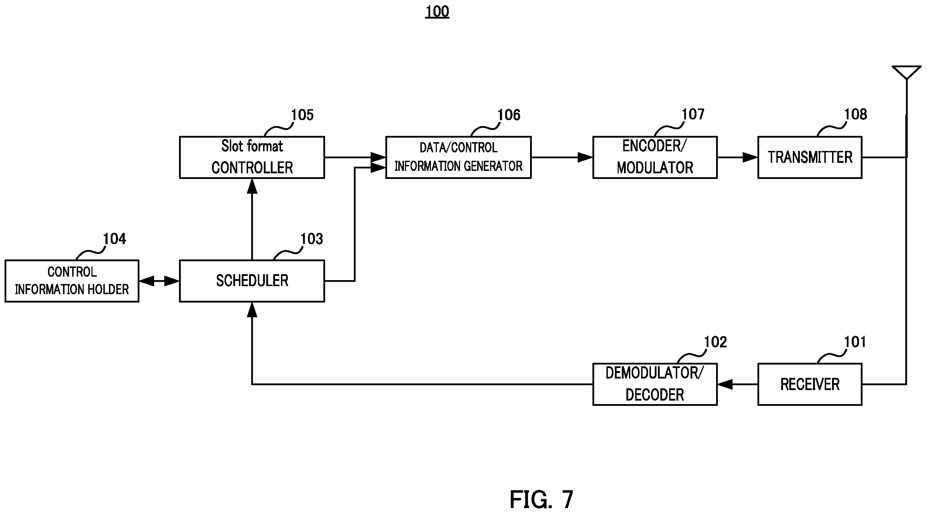

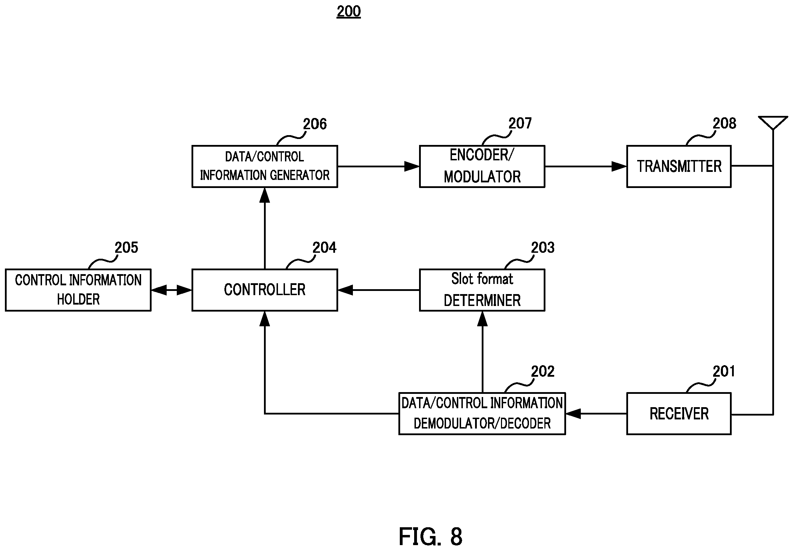

A communication system according to an aspect of the present disclosure may include, for example, base station 100 (for example, gNB) illustrated in FIGS. 5 and 7 and terminal 200 (for example, UE) illustrated in FIGS. 6 and 8. The communication system may include a plurality of base stations 100 and a plurality of terminals 200.

FIG. 5 is a block diagram illustrating an exemplary configuration of a part of base station 100 according to an aspect of the present disclosure. In base station 100 illustrated in FIG. 5, the controller (for example, corresponding to control circuitry) determines the transmission direction configuration (for example, Slot format) for each of a plurality of time resources (for example, symbols) within the unit period (for example, slot). The configuration of the transmission direction may include the configuration of different transmission directions in the same time resource. A transmitter (for example, corresponding to transmission circuitry) transmits the control signal including information on the configuration.

FIG. 6 is a block diagram illustrating an exemplary partial configuration of terminal 200 according to an aspect of the embodiment of the present disclosure. In terminal 200 illustrated in FIG. 6, a receiver (corresponding to, for example, reception circuitry) receives a control signal including information on the configuration (for example, Slot format) for the transmission direction for each of a plurality of time resources (for example, symbols) in a unit period (for example, a slot). The configuration of the transmission direction may include the configuration of different transmission directions in the same time resource. Controller (for example, corresponding to control circuitry) controls transmission and reception based on information related to the configuration.

### [Configuration of Base Station]

FIG. 7 is a block diagram illustrating an exemplary configuration of base station 100 according to an aspect of the present disclosure. In FIG. 7, base station 100 includes receiver 101, demodulator/decoder 102, scheduler 103, control information holder 104, Slot format controller 105, data/control information generator 106, encoder/modulator 107, and transmitter 108.

Note that, for example, at least one of demodulator/decoder 102, scheduler 103, control information holder 104, data/control information generator 106, and encoder/modulator 107 may be included in the controller illustrated in FIG. 5, and transmitter 108 may be included in the transmitter illustrated in FIG. 5.

For example, receiver 101 performs reception processing such as down-conversion or A/D conversion on the received signal received via the antenna, and outputs the received signal after the reception processing to demodulator/decoder 102.

For example, demodulator/decoder 102 demodulates and decodes the received signal (for example, uplink signal) inputted from receiver 101 and outputs the decoding result to scheduler 103.

Scheduler 103 may perform scheduling for terminal 200, for example. Further, for example, scheduler 103 performs scheduling of data or control information for terminal 200 based on at least one of the decoding result inputted from demodulator/decoder 102 and the control information inputted from control information holder 104, and indicates generation of at least one of data or control information to data/control information generator 106 based on the scheduling result. Further, scheduler 103 outputs information related to the scheduling to Slot format controller 105, for example. Furthermore, scheduler 103 may output control information on scheduling for terminal 200 to control information holder 104. Further, scheduler 103 may determine the placement of the guard band between RB sets, for example.

Control information holder 104 holds control information configured for each terminal 200, for example. The control information may include information on the RB set for each terminal 200 (for example, information on the allocated RB set or the like). For example, control information holder 104 may output the held information to each component (for example, scheduler 103) of base station 100 as needed.

Slot format controller 105 determines the Slot format of each terminal 200 based on, for example, the scheduling information inputted from scheduler 103, and issues a generation instruction for information on the determined Slot format (for example, referred to as Slot format information) to data/control information generator 106.

For example, data/control information generator 106 generates at least one of data or control information in accordance with the indication from scheduler 103 and outputs a signal including the generated data or control information to encoder/modulator 107. Further, data/control information generator 106 generates Slot format information in accordance with an instruction from Slot format controller 105, for example, and outputs the generated Slot format information to encoder/modulator 107. Note that the generated data may include signaling information from a higher layer.

Encoder/modulator 107 encodes and modulates a signal input from, for example, data/control information generator 106 (the signal including, for example, data, control information, and/or Slot format information), and outputs the modulated signal to transmitter 108.

Transmitter 108 performs transmission processing such as D/A conversion, up-conversion, or amplification on the signal inputted from encoder/modulator 107, for example, and transmits a radio signal obtained by the transmission processing to terminal 200 through the antenna.

### [Configuration of Terminal]

FIG. 8 is a block diagram illustrating an exemplary configuration of terminal 200 according to an aspect of the present disclosure. In FIG. 8, terminal 200 includes receiver 201, data/control information demodulator/decoder 202, Slot format determiner 203, controller 204, control information holder 205, data/control information generator 206, encoder/modulator 207, and transmitter 208.

Note that, for example, at least one of data/control information demodulator/decoder 202, slot format determiner 203, determiner 204, control information holder 205, data/control information generator 206, and encoder/modulator 207 may be included in the controller illustrated in FIG. 6, and receiver 201 may be included in the receiver illustrated in FIG. 6.

For example, receiver 201 performs reception processing such as down-conversion or A/D conversion on the received signal received via the antenna, and outputs the received signal after the reception processing to data/control information demodulator/decoder 202.

For example, data/control information demodulator/decoder 202 demodulates and decodes the received signal inputted from receiver 201 and outputs the result of decoding the control information to controller 204. The decoding result may include, for example, signaling information from a higher layer. Further, data/control information demodulator/decoder 202 outputs the Slot format information to Slot format determiner 203 when, for example, the decoding result includes Slot format information.

Slot format determiner 203 determines (or identifies, specifies, or judges) the Slot format based on the Slot format information inputted from data/control information demodulator/decoder 202, and outputs information (for example, information on the transmission direction of each symbol in the slot) related to the determined Slot format to controller 204. Note that, for example, in a case where a plurality of RB sets is assigned for terminal 200, information on the Slot format may include information on the transmission direction of each symbol in each slot in each RB set.

Controller 204 may, for example, determine whether data or control information is to be transmitted or received based on information on the Slot format (information on the transmission direction of each symbol) inputted from Slot format determiner 203, control information inputted from control information holder 205 (information on transmission/reception quasi-statically configured by signaling in the higher layer), or a decoding result inputted from data/control information demodulator/decoder 202 (data or control information). For example, if there is reception of data or control information, controller 204 may instruct receiver 201 and data/control information demodulator/decoder 202 to receive (not illustrated). Further, in a case where there is transmission of data or control information, controller 204 may issue an instruction for generating at least one of the data and the control information to data/control information generator 206, for example. Further, controller 204 may determine the placement of the guard band according to the transmission direction of each symbol for each RB set, for example.

Control information holder 205, for example, holds the control information inputted from controller 204, and outputs the held information to each component (for example, controller 204) as needed.

For example, data/control information generator 206 generates data or control information in accordance with the instruction from controller 204 and outputs a signal including the generated data or control information to encoder/modulator 207.

Encoder/modulator 207, for example, encodes and modulates the signal inputted from data/control information generator 206 and outputs the modulated transmission signal to transmitter 208.

Transmitter 208 performs transmission processing such as D/A conversion, up-conversion, or amplification on the signal inputted from encoder/modulator 207, for example, and transmits a radio signal obtained by the transmission processing through the antenna to base station 100.

### [Operations of Base Station 100 and Terminal 200]

Exemplary operations of base station 100 and terminal 200 having the above configurations will be described.

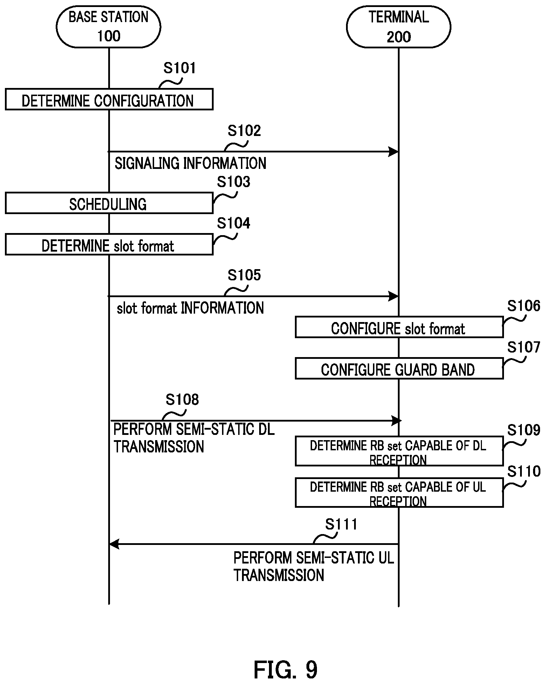

FIG. 9 is a sequence diagram illustrating an exemplary operation of base station 100 and terminal 200.

In FIG. 9, base station 100 determines a configuration, such as quasi-static transmission/reception resources and periodicity (S 101), for example.

Base station 100 transmits higher layer signaling information, including the determined configuration, to the terminal, for example (S 102).

Base station 100 performs scheduling for each RB set for terminal 200, for example (S 103). Further, base station 100 determines the Slot format for each RB set, for example (S 104). For example, base station 100 may determine the configuration of the transmission direction for each of the multiple symbols within the slot. For example, base station 100 may determine the transmission direction configuration (for example, Slot format) individually for each of the plurality of RB sets. The transmission direction configuration may include configurations for different directions within the same symbol.

Base station 100 transmits information on the Slot format (for example, Slot format information) to terminal 200, for example (S 105).

Terminal 200 determines the Slot format of each RB set based on the Slot format information transmitted from, for example, base station 100 (S 106). Further, terminal 200 may configure the guard band between RB sets based on the Slot format of each RB set, for example (S 107).

Base station 100 may perform Downlink transmission based on a quasi-static configuration, for example (S108).

Terminal 200 determines, for example, an RB set capable of Downlink reception and may receive the signal (S 109).

Further, terminal 200 determines, for example, an RB set that is capable of Uplink transmission (S109), and may perform Uplink transmission based on the quasi-static configuration (S111).

### [Indication Method for Indicating Slot Format]

A control and indication method of Slot format in base station 100 (for example, scheduler 103 and Slot format controller 105) will be described. Note that terminal 200 (for example, Slot format determiner 203 and controller 204) may configure (or determine) the Slot format assuming the indication of the Slot format performed by base station 100.

In the present embodiment, a case where a plurality of Slot formats is applied to the same terminal 200 connected to the same base station 100 (for example, the same cell or the same serving cell) will be described. For example, the Slot format may be individually applied to each of a plurality of subbands (for example, RB set) obtained by dividing the system band of Base Station 100.

Note that the RB set is introduced for the unlicensed band of FR1 in Rel. 16, for example, but may be applied to a licensed band (FR1, FR2, or another licensed band). Thus, it is possible to realize a subband for XDD using an RB set.

Hereinafter, an example of an indication method for the Slot format will be described.

### indication Method 1>

In Indication Method 1, base station 100 may allocate a plurality of SFI fields, each corresponding to one of the plurality of RB sets, on a control channel (for example, DCI format 2_0), for example. For example, a plurality of SFI fields corresponding respectively to the Slot formats of the plurality of RB sets may be placed in a control channel (for example, a control signal).

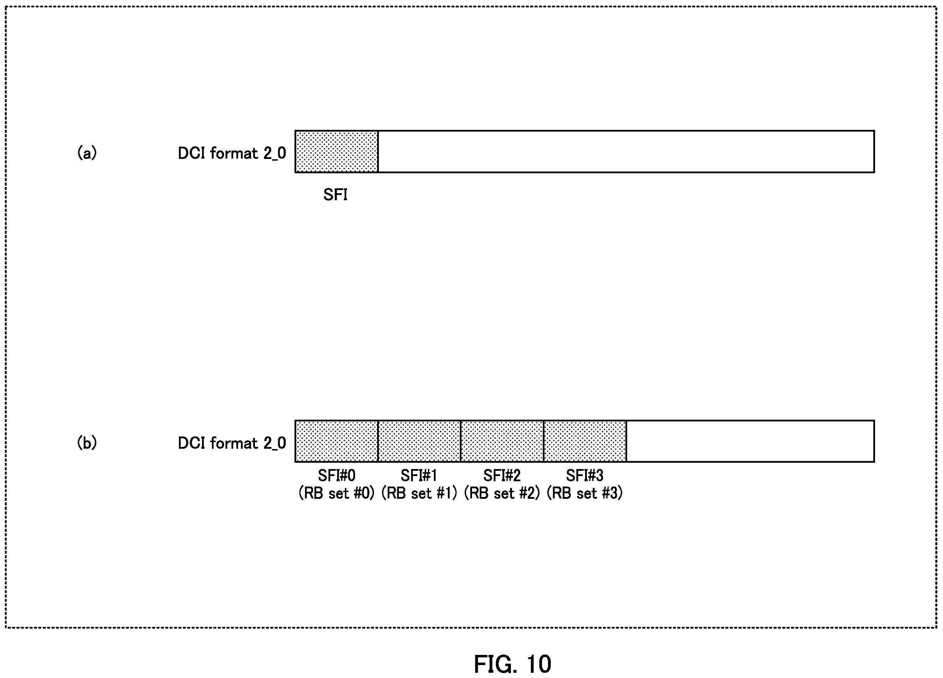

Parts (a) and (b) in FIG. 10 illustrate examples of the SFI fields.

Part (a) in FIG. 10 illustrates an example in which one SFI field is assigned. The example illustrated in part (a) in FIG. 10 may also be an existing indication method of a Slot format by SFI. In part (a) in FIG. 10, the same Slot format may be configured for multiple RB sets by one SFI field.

Part (b) in FIG. 10 illustrates an example in which a plurality of SFI fields is allocated. In the example illustrated in part (b) in FIG. 10, four RB sets (RB sets #0 to #3) are assigned for terminal 200, and four SFI fields corresponding to the four RB sets are placed on the control channel.

Base station 100 may configure a Slot format individually for each RB set, for example. Further, terminal 200 identifies the Slot format of each RB set by reading the SFI indicated in each SFI field, for example.

For example, the position (for example, bit position) of the individual SFI field for the RB set may be configured for terminal 200 by the signaling information in a higher layer, and may be defined in advance in the standards. Further, the positions of the SFI fields may be configured, for example, collectively for a plurality of RB sets or individually for each of the RB sets.

For example, in a case where the positions of the SFI fields are configured collectively for a plurality of RB sets, the bit position of the first SFI field (in part (b) in FIG. 10, the SFI field in RB set #0) may be indicated, but the bit positions of the other SFI fields need not be indicated when it is assumed that SFI fields are continuous (for example, the state in part (b) in FIG. 10), and thus, the overhead of signaling information can be reduced.

Further, for example, in a case where the positions of the SFI fields are individually configured for a plurality of RB sets, the degree of freedom in the allocation of a downlink control channel can be improved.

As described above, according to Indication Method 1, base station 100 can configure the Slot format for each RB by the allocation of the SFI field individually configured for the RB set, and terminal 200 can identify the Slot format for each RB set.

### indication Method 2>

In Indication Method 2, the Slot formats of the plurality of RB sets may be configured by a Slot format combination.

The Slot format combination is used, for example, to configure the Slot formats of multiple slots together.

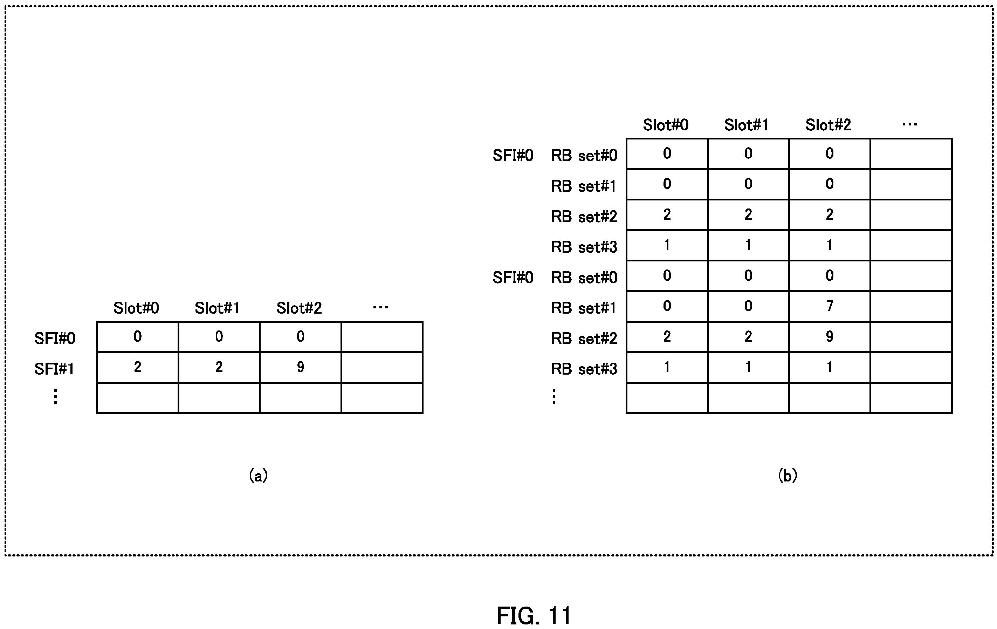

Parts (a) and (b) in FIG. 11 illustrate examples of a Slot format combination. Note that the numbers in the table illustrated in parts (a) and (b) in FIG. 11 may indicate indexes (for example, the indexes illustrated in FIG. 3) for identifying Slot formats.

Part (a) in FIG. 11 illustrates a combination of Slot formats (for example, Slot format indexes) that are configured respectively for a plurality of slots for each SFI index. Note that the example in part (a) in FIG. 11 may be an existing Slot format combination.

Part (b) in FIG. 11 illustrates an example of a Slot format combination according to Indication Method 2. In part (b) in FIG. 11, for example, the dimension (entry) of the RB set is added to the Slot format combination in part (a) in FIG. 11. For example, the SFI index in part (b) in FIG. 11 corresponds to a combination of Slot formats (transmission direction configurations) respectively for the plurality of slots and the plurality of RB sets.

Thus, in part (b) in FIG. 11, individual SFIs for the plurality of slots and the plurality of RB sets can be configured with, for example, the same SFI index as in part (a) in FIG. 11. In the example of part (b) in FIG. 11, individual SFIs for four RB sets (for example, RB sets #0 to #3) in addition to individual SFIs for slots are configured for one SFI index. For example, the SFI index illustrated in part (b) in FIG. 11 may be associated with a combination of indexes (for example, the indexes illustrated in FIG. 3) that are determined individually respectively for a plurality of slots and a plurality of RB sets and identify the Slot format (transmission direction configuration).

Note that the indication method of SFI in the control channel and the configuration method of the SFI field may utilize existing methods.

Further, the number of RB sets in the Slot format combination in Indication Method 2 may be the same as or different from the number of RB sets assigned for terminal 200.

In the former case, for example, when the RB sets assigned for terminal 200 are RB sets #0, #1, #2, and #3, the Slot formats of RB sets #0, #1, #2, and #3 may be configured for all SFI indexes. In this case, each SFI index includes the configuration of all RB sets, which makes it easy to configure the Slot format for each RB set in terminal 200.

In the latter case, for example, when the RB sets assigned for terminal 200 are RB sets #0, #1, #2, and #3, the Slot format for a certain SFI index may include the Slot formats of all RB sets (for example, RB sets #0, #1, #2, and #3) or may include the Slot formats of some RB sets (for example, RB set #0 and #1). For example, the transmission direction configured by the higher layer signaling information (for example, TDD UL/DL configuration) for an RB set in which the SFI format is not configured may be applied. For example, when the transmission direction of a certain symbol is configured to be flexible by the signaling information, the transmission direction of a symbol for which the configuration is not made by the SFI may remain flexible.

As described above, according to Indication Method 2, it is possible to configure a Slot format individually for an RB set by adding the dimension of the RB set to the Slot format combination, enabling terminal 200 to identify the individual Slot format for each RB set based on the SFI. Further, according to Indication Method 2, it is not necessary to add an SFI field for each RB set in the control channel as in Indication Method 1, and thus, the overhead of the control channel can be reduced.

### indication Method 3>

In Indication Method 3, the Slot formats for the plurality of RB sets may be configured by a Slot format combination in the same manner as in Indication Method 2. Further, the Slot format combination in Indication Method 3 may, for example, configure the Slot format for each slot individual to the RB set with reference to another Slot format combination (for example, an existing Slot format combination).

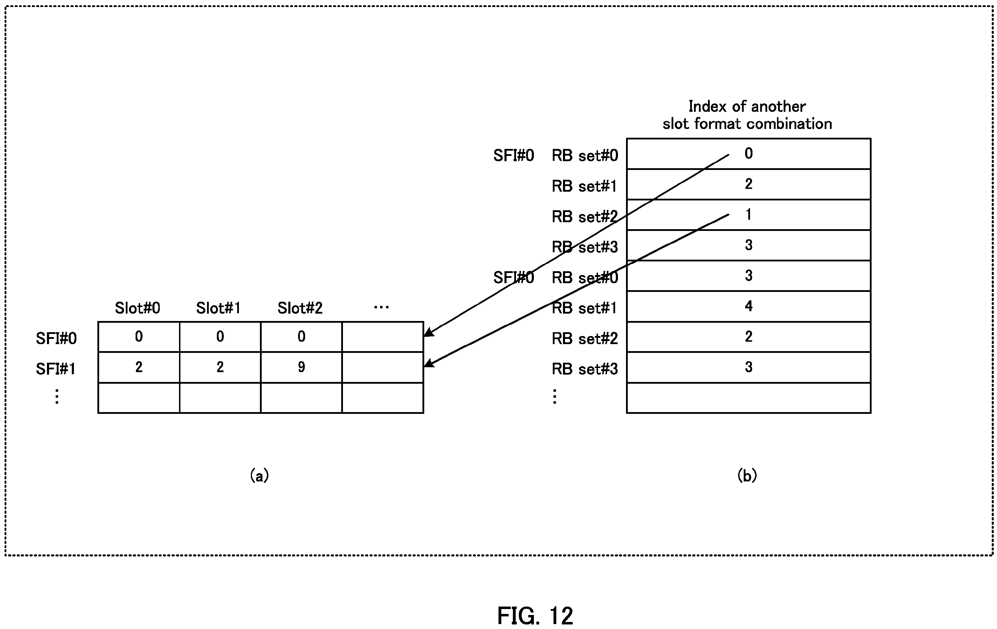

Parts (a) and (b) in FIG. 12 illustrate examples of Slot format combinations.

Part (a) in FIG. 12 illustrates an example of the Slot format combinations (for example, the existing Slot format combinations). Note that the numbers in the table illustrated in part (a) in FIG. 12 may indicate the indexes of the Slot formats (for example, the indexes illustrated in FIG. 3). The SFI index illustrated in part (a) in FIG. 12 may be associated with a combination of Slot formats (configurations of transmission direction) determined uniquely respectively for a plurality of slots, for example. Note that the example in part (a) in FIG. 12 may be the existing Slot format combinations.

Part (b) in FIG. 12 illustrates an example of Slot format combinations according to Indication Method 3. In part (b) in FIG. 12, as in Indication Method 2 (for example, part (b) in FIG. 11), a dimension of the RB set is introduced. For example, the SFI index in part (b) in FIG. 12 corresponds to a combination of Slot formats (transmission direction configuration) respectively for the plurality of slots and the plurality of RB sets.

Further, in part (b) in FIG. 12, the configuration of the transmission direction for each slot in each RB set may be determined based on the configuration of another Slot format combination in part (a) in FIG. 12. For example, the value '0' corresponding to RB set #0 in SFI index #0 in part (b) in FIG. 12 represents SFI index #0 in the Slot format combination in part (a) in FIG. 12. Similarly, for example, the value '1' corresponding to RB set#2 in SFI index#0 in part (b) in FIG. 12 represents SFI index#1 in the Slot format combination in part (a) in FIG. 12.

As described above, the SFI indexes illustrated in part (b) in FIG. 12 are associated with combinations of SFI indexes illustrated in part (a) in FIG. 12 individual respectively to the plurality of RB sets. For example, SFI index #0 illustrated in part (b) in FIG. 12 is associated with a combination of SFI index #0, #2, #1, and #3 in the Slot format combination in part (a) in FIG. 12, which are configured individually for RB sets #0 to #3. The same applies to the other SFI indexes illustrated in part (b) in FIG. 12.

The Slot format combination illustrated in part (b) in FIG. 12 does not have the Slot format configuration for each slot, but realizes the Slot format configuration for each RB set and each slot by referring to the Slot format for each slot in the Slot format combination illustrated in part (a) in FIG. 12.

For example, when the same Slot format is configured between RB sets, the same Slot format needs to be configured for each RB set in the Slot format combination in indication method 2 (in other words, it is necessary to configure the same Slot format between RB sets). In contrast, in Indication Method 3, it is sufficient to refer to the SFI configured in another Slot format combination (for example, an existing Slot format combination), thus avoiding duplicated configuration.

Note that the indication method of SFI in the control channel and the configuration method of the SFI field may utilize existing methods.

As described above, according to Indication Method 3, it is possible to configure the Slot format for each RB set by referring to another Slot format combination, and thus, terminal 200 can identify an individual Slot format for each RB set. Further, according to Indication Method 3, the number of overlapping Slot format configurations can be reduced as compared to Indication Method 2, and thus, the overhead of signaling information in the higher layer in addition to the overhead of the control channel can be reduced.

Above, the examples of the indication methods for Slot formats have been described.

### [Placement Method of Guard Band]

Next, an example of a method for placing a guard band according to the Slot format configured in the RB set will be described.

The guard band may be placed between the subbands mainly when the transmission directions of the adjacent subbands are different.

In the present embodiment, the guard band may be placed without additional indication for the placement of the guard band in a case where the slot format between subbands (for example, RB sets) is identifiable by the indication methods described above. For example, base station 100 and terminal 200 may place guard bands according to the combinations of the following transmission directions (for example, D, U, and F).

In the case of (D, D) or (U, U), the guard band is not placed.

In the case of (D, U), (D, F), (U, F), and (F, F): the guard band is placed.

Here, the aforementioned (x, x) represents a combination of the transmission directions (for example, any of D, U, and F) of adj acent RB sets (in any order). For example, (D, U) indicates that the transmission direction for one RB set is Downlink and the transmission direction for the other RB set is Uplink.

Further, since Flexible can be both Downlink and Uplink, a guard band may be placed when Flexible is contiguous to another direction in the example described above.

Note that, for example, after Flexible is indicated by SFI, the transmission/reception (for example, allocation) of PDSCH or PUSCH may be indicated by downlink control information, and the transmission direction (for example, Downlink or Uplink) of the symbol that is Flexible may be determined. In that case, the presence or absence of the guard band placement according to the combination (x, x) may be determined based on the transmission direction finally decided for the symbol that is Flexible.

Further, for example, the size of the guard band may be configured in advance by signaling information from a higher layer. The larger the size of the guard band, the less the influence of interference can be, but no resource is assigned for the guard band, and thus, the efficiency of resource utilization may decrease. For this reason, for example, it is expected from the viewpoint of resource utilization efficiency that the size of the guard band is set to the minimum necessary size. Note that the optimal size of a guard band may vary depending on the relationship between adj acent RB sets. Accordingly, the size of the guard band may be individually set for each boundary of the RB set, for example. Thus, it is possible to reduce the influence of interference while improving the resource utilization efficiency.

Hereinafter, an example of a method for placing a guard band within a slot will be described.

### <Placement Method 1>

In Placement Method 1, for example, when there is even a single symbol in a slot whose transmission direction is different from those of the other symbols in the adjacent RB sets, a guard band may be configured for all the symbols in the slot.

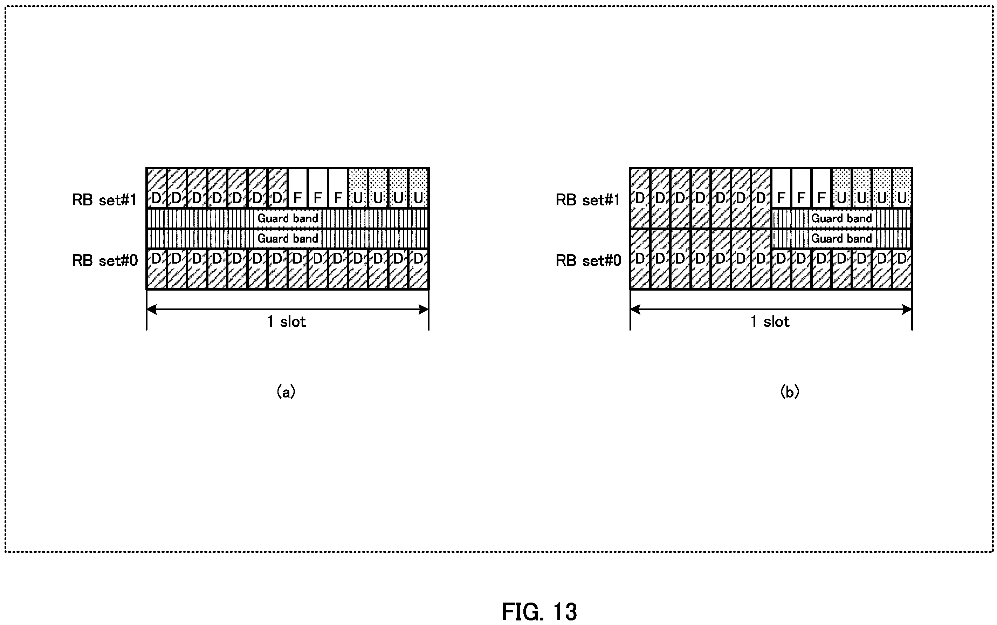

Part (a) in FIG. 13 illustrates an example of the placement of the guard bands in Placement Method 1.

In part (a) in FIG. 13, the symbols in the first half of the slot (the first seven symbols) are Downlink (also referred to as Downlink symbols) in both RB set #1 and RB set #2. In contrast, in part (a) in FIG. 13, the symbols in the latter half of the slot (the latter seven symbols) correspond to different transmission directions between RB set #1 and RB set #2.

In this case, as illustrated in part (a) in FIG. 13, a guard band is placed for all symbols in the slot.

On the other hand, for example, in RB set #1 and RB set #2, when the transmission direction configuration is the same for all the symbols in the slot, a guard band need not be placed in the slot (not illustrated).

Thus, the presence or absence of a guard band does not change for each symbol in the slot, and base station 100 and terminal 200 do not need to perform processing such as rate matching in the vicinity of the guard band. Therefore, it is possible to simplify data transmission and reception processing caused by the presence or absence of the guard band configuration.

### <Placement Method 2>

In Placement Method 2, for example, a guard band may be placed at symbols in adjacent RB sets where the transmission directions are different, and a guard band need not be placed at symbols in adjacent RB sets where the transmission directions are the same.

Part (b) in FIG. 13 illustrates an example of the placement of the guard band in Placement Method 2.

In part (b) in FIG. 13, the symbols in the first half of the slot (the first seven symbols) are Downlink in both RB set #1 and RB set #2. In contrast, in part (b) in FIG. 13, the symbols in the latter half of the slot (the latter seven symbols) correspond to different transmission directions between RB set #1 and RB set #2.

In this case, as illustrated in part (b) in FIG. 13, no guard band is placed in the first half of the slot where the symbols have the same transmission direction, and a guard band is placed in the second half of the slot where the symbols have different transmission directions.

Thus, for example, since a guard band is placed at symbols where the influence of interference is large and no guard band is placed at symbols where the influence of interference is small, the efficiency in utilizing resources can be enhanced.

Above, an example of a method for placing a guard band has been described.

In this manner, in the present embodiment, base station 100 determines the Slot format for each of the plurality of symbols in the slot and transmits a control signal including information on the determined Slot format. Further, terminal 200 receives the control signal including the information on the Slot format for each of the plurality of symbols in the slot, and controls transmission and reception based on the information on the Slot format.

For example, the Slot formats are individually configured for a plurality of RB sets, and the Slot formats corresponding to the respective RB sets may differ. That is, the Slot formats may include configurations for different transmission directions for the same symbol.

Thus, base station 100 can appropriately indicate individual Slot formats (for example, configuration for the transmission direction or resource allocation) for a plurality of RB sets to terminal 200. Terminal 200 can identify a Slot format individually for each RB set, for example, even in a case where a plurality of RB sets is allocated, and can thus appropriately determine whether or not it is possible to perform transmission and/or reception for each RB set even in a case where the transmission direction is different for each RB set (or subband).

Further, in the present embodiment, the guard band (for example, an intra-cell guard band) may be placed depending on the transmission direction relationship between the adjacent RB sets (for example, whether the transmission directions are the same or not). Thus, the presence or absence of guard band placement between the adjacent RB sets is configured as necessary, which makes it possible to improve resource utilization efficiency while reducing CLI.

Thus, according to the present embodiment, XDD can be realized using the RB set.

### (Other Embodiments)

(1) Indication of an individual Slot format for each RB set may be used for the determination of whether to transmit SRS or CSI-RS individually for each RB set. SRS and CSI-RS may be used, for example, for measuring CLI.

For example, the time and frequency resources for SRS transmission or CSI-RS reception are configured in advance for terminal 200 by the signaling information, and whether terminal 200 actually performs SRS transmission or CSI-RS reception may be determined based on the indication of the Slot format.

Thus, for example, terminal 200 can dynamically control the execution of SRS transmission or CSI-RS reception according to the utilization situation of each RB set in response to the indication of the Slot format, thereby improving the resource utilization efficiency for CSI or CLI measurement.

For example, in a case where the Slot format is indicated for each RB set, terminal 200 transmits SRS in an Uplink symbol and does not transmit SRS in a Downlink symbol.

Further, for example, in a case where the Slot format is indicated for each RB set, terminal 200 receives CSI-RS (for example, including Tracking Reference Signal (TRS)) in a Downlink symbol, and does not perform the reception of CSI-RS in an Uplink symbol.

Further, for example, terminal 200 may determine the transmission of an SRS or the reception of a CSI-RS in a Flexible symbol based on the signaling information. The handling of the Flexible symbol (for example, which of transmission and reception in the Flexible symbol leads to an improvement in the efficiency of control, or whether not performing transmission or reception leads to an improvement in the efficiency of control) may be configured by signaling information, since the handling depends on the scaling of base station 100 or the like.

(2) For example, an indication method for the Slot format for Full duplex as illustrated in part (c) in FIG. 1 will be described.

In the existing Slot format indication, three types of Downlink, Uplink, and Flexible are supported as the transmission directions of a symbol. On the other hand, Full duplex is expected to include a configuration that supports both Downlink and Uplink communications simultaneously on the same time and frequency resources.

Here, since Flexible indicates a state in which the transmission direction is undefined or terminal 200 does not grasp the transmission direction, it is difficult to use (or indicate) Flexible as a symbol for simultaneous transmission and reception in Downlink and Uplink.

Therefore, for example, the following Slot format may be applied for Full duplex.

As a symbol that supports both Downlink and Uplink communications simultaneously in the same time resource and the same frequency resource, for example, a "Mixed" symbol is introduced.

The Mixed symbol may be configured quasi-statically, for example, by signaling information at a higher layer (for example, TDD UL/DL configuration), or may be configured by a Slot format by downlink control information.

Terminal 200 may, for example, assume that when the Mixed configuration is indicated, Downlink reception and Uplink transmission are performed simultaneously in the corresponding symbol.

For example, a case will be described in which Downlink (for example, PDCCH reception) and Uplink (for example, Configured grant transmission) are configured simultaneously in the same symbol by the signaling information of the higher layer. For example, when Downlink is indicated by the Slot format, terminal 200 executes PDCCH reception and does not execute Configured grant transmission. Further, in a case where Uplink is indicated by the Slot format, for example, terminal 200 executes Configured grant transmission and does not perform PDCCH reception. In a case where Mixed is indicated by the Slot format, terminal 200 executes both PDCCH reception and Configured grant transmission.

Further, in the same manner as the Flexible symbol can be overridden or overwritten with the Downlink symbol or the Uplink symbol, the overwriting of the Flexible symbol with a Mixed symbol may be performed. In XDD, for example, the Flexible symbol can be overwritten with Downlink or Uplink, whereas in Full duplex, both Downlink and Uplink can be supported in the same symbol by overwriting the Flexible symbol with Mixed.

Further, for example, the overwriting the Downlink symbol or Uplink symbol with Mixed may be supported by the following two methods (Method 1 and Method 2). For example, Method 1 and Method 2 may be modified by (or switched to) signaling information.

### <Method 1>

In Method 1, overwriting Downlink and Uplink symbols with Mixed symbols is prohibited.

For example, the Downlink and Uplink symbols may be regarded as symbols with a unidirectionally determined transmission direction. For example, Uplink transmission may be prohibited for symbols configured with Downlink. Similarly, for example, Downlink reception may be prohibited for symbols configured with Uplink.

For example, even if the Slot format is incorrectly indicated to terminal 200 from base station 100, the symbol configured with one of the transmission directions of the Downlink and the Uplink is not overwritten, and thus, transmission/reception in the other transmission direction is prohibited.

For example, in a case where Full duplex is supported and CLI by transmission/reception in both directions becomes a problem, it is possible to reduce interference by configuring the transmission/reception in one direction. As described above, in Method 1, it is possible to achieve more robust transmission direction control.

### <Method 2>

In Method 2, overwriting Downlink and Uplink symbols with Mixed symbols is supported.

For example, Downlink and Uplink are states in which transmission in one transmission direction is temporarily permitted, and in a case where Downlink and Uplink are overwritten with Mixed, transmission in the other transmission direction can be additionally supported.

According to Method 2, for example, even in a symbol once configured with one of the Downlink or Uplink transmission directions, the transmission in the other direction can be additionally supported if additional traffic occurs. Thus, the flexibility of scheduling can be improved, and the performance of the system can be enhanced.

Note that, in a case where Downlink and Uplink resources are scheduled by downlink control information for a symbol indicated as a Flexible symbol (for example, in a case where both PDSCH and PUSCH are scheduled), terminal 200 may regard the symbol as a Mixed symbol.

(3) In the embodiment described above, the RAT to be supported does not necessarily have to be NR.

Further, the unit of resource in XDD where the frequency resource is divided is not limited to an RB set. The Slot format indication described above may be applied to subbands obtained by dividing the system band. Additionally, the RB set may be referred to by another name.

Further, the indication of SFI is not limited to DCI format 2_0, and SFI may be indicated by another signal (for example, another channel, another DCI format, or at least one of higher layer signaling).

Further, in the embodiment described above, the values such as the number of RB sets, the number of slots, and the number of symbols in a slot are merely examples and are not limited.

### (Supplement)

Information indicating whether or not terminal 200 supports the functions, operations, or processes described in the above-described embodiments may be transmitted (or indicated) from terminal 200 to base station 100 as, for example, capability information or capability parameters of terminal 200.

The capability information may include an information element (IE) indicating whether or not terminal 200 supports at least one of the functions, operations, or processes described in the above-described embodiments. Alternatively, the capability information may include an information element indicating whether or not terminal 200 supports a combination of any two or more of the functions, operations, or processes described in the above-described embodiments.

Based on, for example, capability information received from terminal 200, base station 100 may determine (or otherwise decide or assume) a function, operation, or process supported (or not supported) by terminal 200 which transmitted the capability information. Base station 100 may perform the operation, processing, or control according to a determination result based on the capability information. For example, base station 100 may control a Slot format based on the capability information received from terminal 200.

Note that not supporting, by terminal 200, some of the functions, operations, or processes described in each of the above-described embodiments may be read as restrictions on some of such functions, operations, or processes in terminal 200. For example, information or requests regarding such restrictions may be indicated to base station 100.

The information regarding the capability or restrictions of terminal 200 may be defined, for example, in a standard, or may be implicitly indicated to base station 100 in association with information known to base station 100 or information transmitted to base station 100.

### (Control Signal)

In the present disclosure, the downlink control signal (or downlink control information) according to one exemplary embodiment of the present disclosure may be a signal (or information) transmitted in a Physical Downlink Control Channel (PDCCH) in a physical layer, for example, or may be a signal (or information) transmitted in a Medium Access Control Control Element (MAC CE) or a Radio Resource Control (RRC) in a higher layer. Further, the signal (or information) is not limited to that notified by the downlink control signal, but may be predefined in the specifications (or standard) or may be preconfigured for the base station and the terminal.

In the present disclosure, the uplink control signal (or uplink control information) relating to the exemplary embodiment of the present disclosure may be, for example, a signal (or information) transmitted in a PUCCH of the physical layer or a signal (or information) transmitted in the MAC CE or RRC of the higher layer. In addition, the signal (or information) is not limited to a case of being indicated by the uplink control signal and may be previously specified by the specifications (or standards) or may be previously configured in a base station and a terminal. Further, the uplink control signal may be replaced with, for example, uplink control information (UCI), 1st stage sidelink control information (SCI), or 2nd stage SCI.

### (Base Station)

In one exemplary embodiment of the present disclosure, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Furthermore, in the sidelink communication, the terminal may play a role of a base station. Further, instead of the base station, a relay apparatus that relays communication between a higher node and a terminal may be used. Moreover, a road side device may be used.

### (Uplink/Downlink/Sidelink)

One exemplary embodiment of the present disclosure may be applied to any of an uplink, downlink, and a sidelink, for example. For example, one exemplary embodiment of the present disclosure may be applied to a Physical Uplink Shared Channel (PUSCH), a Physical Uplink Control Channel (PUCCH), and a Physical Random Access Channel (PRACH) in the uplink, a Physical Downlink Shared Channel (PDSCH), PDCCH or a Physical Broadcast Channel (PBCH) in the downlink, or a Physical Sidelink Shared Channel (PSSCH), a Physical Sidelink Control Channel (PSCCH), a Physical Sidelink Broadcast Channel (PSBCH) in the sidelink.

The PDCCH, the PDSCH, the PUSCH, and the PUCCH are examples of a downlink control channel, a downlink data channel, an uplink data channel, and an uplink control channel, respectively. Further, the PSCCH and the PSSCH are examples of a sidelink control channel and a sidelink data channel, respectively. Further, the PBCH and the PSBCH are examples of a broadcast channel, and the PRACH is an example of a random access channel.

### (Data Channels/Control Channels)

One exemplary embodiment of the present disclosure may be applied to any of a data channel and a control channel, for example. For example, in one exemplary embodiment of the present disclosure, a channel in one exemplary embodiment of the present disclosure may be replaced with any of a PDSCH, a PUSCH, and a PSSCH for the data channel, or a PDCCH, a PUCCH, a PBCH, a PSCCH, and a PSBCH for the control channel.

### (Reference Signals)

In one exemplary embodiment of the present disclosure, the reference signals are, for example, signals known to both a base station and a mobile station and each reference signal may be referred to as a reference signal (RS) or sometimes a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

### (Time Intervals)

In one exemplary embodiment of the present disclosure, the units of time resources are not limited to one or a combination of slots and symbols, but may be time resource units such as, for example, frames, superframes, subframes, slots, time slot subslots, minislots, or symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiments described above and may be other numbers of symbols.

### (Frequency Band)

One exemplary embodiment of the present disclosure may be applied to any of a licensed band and an unlicensed band.

### (Communication)

One exemplary embodiment of the present disclosure may be applied to any of communication between a base station and a terminal (Uu link communication), communication between a terminal and a terminal (Sidelink communication), and communication of a Vehicle to Everything (V2X). In one example, a channel in one exemplary embodiment of the present disclosure may be replaced with any of a PSCCH, a PSSCH, a Physical Sidelink Feedback Channel (PSFCH), a PSBCH, a PDCCH, a PUCCH, a PDSCH, a PUSCH, and a PBCH.

Further, one exemplary embodiment of the present disclosure may be applied to either of terrestrial networks or a non-terrestrial network (NTN) such as communication using a satellite or a high-altitude pseudolite (High Altitude Pseudo Satellite (HAPS)). Further, one exemplary embodiment of the present disclosure may be applied to a terrestrial network having a large transmission delay compared to the symbol length or slot length, such as a network with a large cell size and/or an ultra-wideband transmission network.

### (Antenna Ports)

In one exemplary embodiment of the present disclosure, the antenna port refers to a logical antenna (antenna group) configured of one or more physical antennae. For example, the antenna port does not necessarily refer to one physical antenna and may refer to an array antenna or the like configured of a plurality of antennae. In one example, the number of physical antennae configuring the antenna port may not be specified, and the antenna port may be specified as the minimum unit with which a terminal station can transmit a Reference signal. Moreover, the antenna port may be specified as the minimum unit for multiplying a weight of a Precoding vector.

### <5G NR System Architecture and Protocol Stack>

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

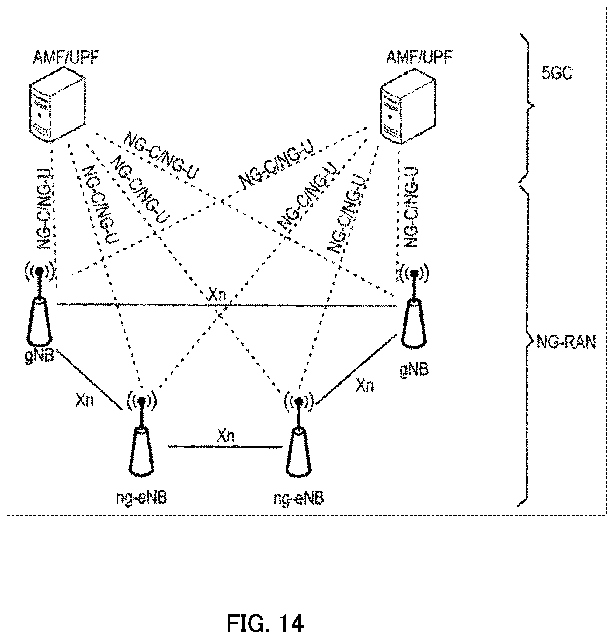

For example, the overall system architecture assumes an NG-RAN (Next Generation-Radio Access Network) that includes gNBs. The gNB provides the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in FIG. 14 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5 ms for UL and DL each for user plane latency) and high reliability (1-10⁻⁵ within 1 ms). Finally, mMTC may preferably require high connection density (1,000,000 devices/km2 in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, 60 kHz, and so forth. The symbol duration Tᵤ and the subcarrier spacing Δf are directly related through the formula Δf = 1/Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grids is called a resource element and is identified based on the frequency index in the frequency domain and the symbol position in the time domain (see 3GPP TS 38.211 v15.6.0).

### <Functional Split between NG-RAN and 5GC in 5G NR>

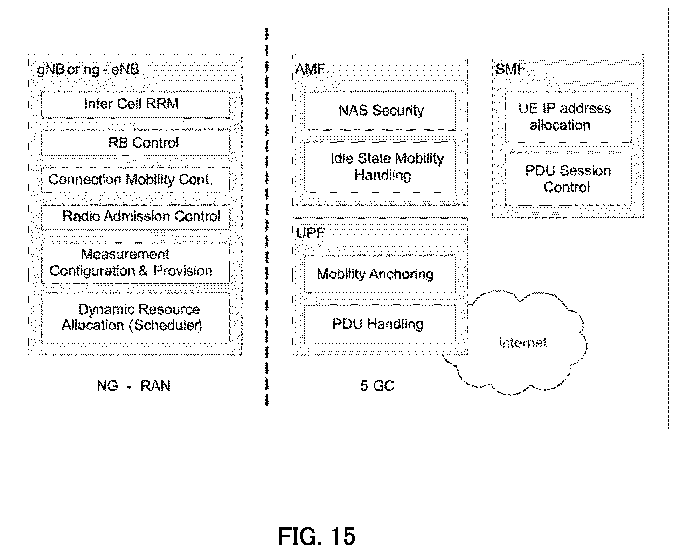

FIG. 15 illustrates the functional split between the NG-RAN and the 5GC. NG-RAN logical node is a gNB or ng-eNB. The 5GC has logical nodes AMF, UPF and SMF.

For example, gNB and ng-eNB hosts the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or Operation, Admission, Maintenance (OAM));
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Function of Non-Access Stratum (NAS) signaling termination;
- NAS signaling security;
- Access Stratum, AS, Security control;
- Inter-Core Network (CN) node signaling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function (SMF) selection.

Furthermore, the User Plane Function, UPF, hosts the following main functions:
- Anchor point for Intra-/Inter-RAT mobility (when applicable);
- External Protocol Data Unit (PDU) session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Function of downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink data notification.

### <RRC Connection Setup and Reconfiguration Procedure>

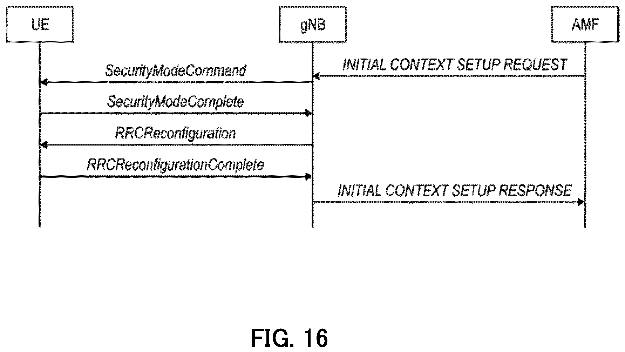

FIG. 16 illustrates some interactions between a UE, gNB, and AMF (a 5GC Entity) performed in the context of a transition of the UE from RRC_IDLE to RRC_CONNECTED for the NAS part (see TS 38 300 v15.6.0).

RRC is a higher layer signaling (protocol) used for UE and gNB configuration. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB informs the AMF that the setup procedure is completed with the INITIAL

### CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <Usage Scenarios of IMT for 2020 and beyond>

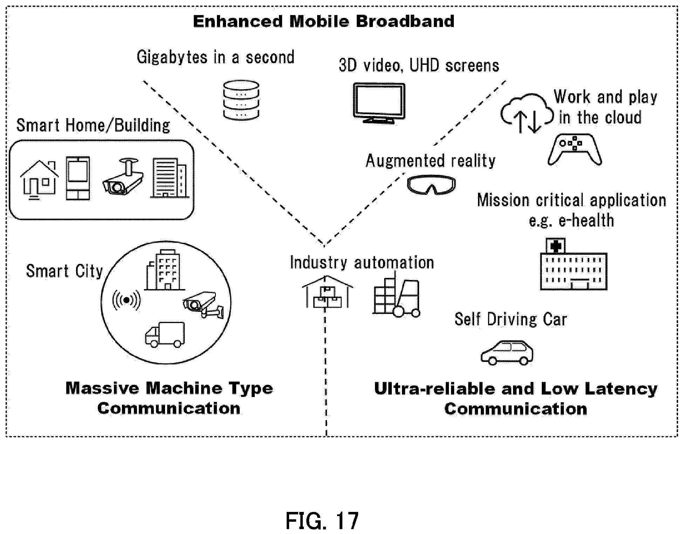

FIG. 17 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 17 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization up to the extent of a few µs (where the value can be one or a few µs depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearer (DRB) together with the PDU Session, e.g., as illustrated above with reference to FIG. 16. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

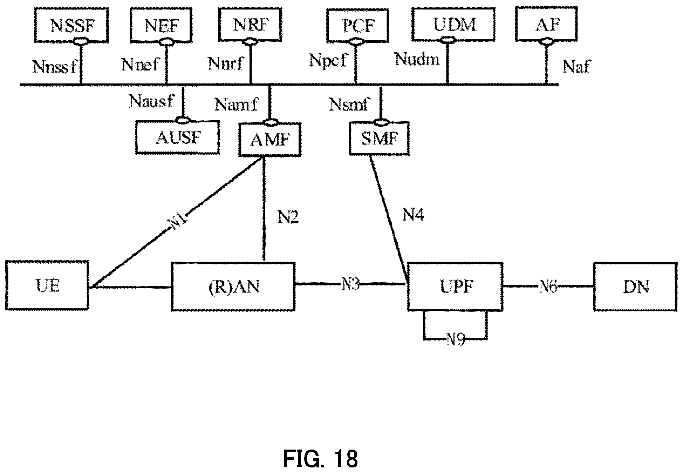

FIG. 18 illustrates a 5G NR non-roaming reference architecture (see TS 23.501 v16.1.0, section 4.23). An Application Function (AF), e.g., an external application server hosting 5G services, exemplarily described in FIG. 17, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 18 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that includes: a transmitter, which, in operation, transmits a request containing a QoS requirement for at least one of URLLC, eMMB and mMTC services to at least one of functions (for example NEF, AMF, SMF, PCF,UPF, etc.) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A base station according to one exemplary embodiment of the present disclosure, includes: control circuitry, which, in operation, determines a configuration of a transmission direction for each of a plurality of time resources in a unit period, the configuration including configurations of the transmission direction different for the same time resource; and transmission circuitry, which, in operation, transmits a control signal including information on the configuration.

In one exemplary embodiment of the present disclosure, the control circuitry determines the configuration individually for each of a plurality of bands into which a frequency band is divided.

In one exemplary embodiment of the present disclosure, a plurality of fields each corresponding to the configuration for each of the plurality of bands is placed in the control signal.

In one exemplary embodiment of the present disclosure, the information includes a first index corresponding to a combination of the configurations respectively for the plurality of unit periods and the plurality of bands.

In one exemplary embodiment of the present disclosure, the first index is associated with a combination of information identifying the configuration determined individually for each of the plurality of unit periods and each of the plurality of bands.

In one exemplary embodiment of the present disclosure, a combination of information identifying the configuration uniquely determined for each of the plurality of unit periods is associated with a second index information, and the first index is associated with a combination of a plurality of the second indexes individual to the plurality of bands.

In one exemplary embodiment of the present disclosure, the configuration includes a configuration that supports both downlink and uplink communications simultaneously in the same time resource and a same frequency resource.

A terminal according to one exemplary embodiment of the present disclosure, includes: reception circuitry, which, in operation, receives a control signal including information on a configuration of a transmission direction for each of a plurality of time resources in a unit period, the configuration including configurations of the transmission direction different for the same time resource; and control circuitry, which, in operation, controls transmission and reception based on the information on the configuration.

In a communication method according to one exemplary embodiment of the present disclosure, a base station determines a configuration of a transmission direction for each of a plurality of time resources in a unit period, the configuration including configurations of the transmission direction different for the same time resource; and transmits a control signal including information on the configuration.

In a communication method according to one exemplary embodiment of the present disclosure, a terminal receives a control signal including information on a configuration of a transmission direction for each of a plurality of time resources in a unit period, the configuration including configurations of the transmission direction different for the same time resource; and controls transmission and reception based on the information on the configuration.

The disclosure of Japanese Patent Application No. 2022-056365, filed on March 30, 2022, including the specification, drawings and abstract, is incorporated herein by reference in its entirety.

### Industrial Applicability

An exemplary embodiment of the present disclosure is useful for radio communication systems.

### Reference Signs List

100 Base station
101, 201 Receiver
102 Demodulator/decoder
103 Scheduler
104, 205 Control information holder
105 Slot format controller
106, 206 Data/control information generator
107, 207 Encoder/modulator
108, 208 Transmitter
200 Terminal
202 Data/control information demodulator/decoder
203 Slot format determiner
204 Controller

## Claims

1. Abase station, comprising:
control circuitry, which, in operation, determines a configuration of a transmission direction for each of a plurality of time resources in a unit period, the configuration including configurations of the transmission direction different for the same time resource; and
transmission circuitry, which, in operation, transmits a control signal including information on the configuration.

2. The base station according to claim 1, wherein
the control circuitry determines the configuration individually for each of a plurality of bands into which a frequency band is divided.

3. The base station according to claim 2, wherein
a plurality of fields each corresponding to the configuration for each of the plurality of bands is placed in the control signal.

4. The base station according to claim 2, wherein
the information includes a first index corresponding to a combination of the configurations respectively for the plurality of unit periods and the plurality of bands.

5. The base station according to claim 4, wherein
the first index is associated with a combination of information identifying the configuration determined individually for each of the plurality of unit periods and each of the plurality of bands.

6. The base station according to claim 4, wherein:
a combination of information identifying the configuration uniquely determined for each of the plurality of unit periods is associated with a second index information, and
the first index is associated with a combination of a plurality of the second indexes individual to the plurality of bands.

7. The base station according to claim 1, wherein
the configuration includes a configuration that supports both downlink and uplink communications simultaneously in the same time resource and a same frequency resource.

8. A terminal, comprising:
reception circuitry, which, in operation, receives a control signal including information on a configuration of a transmission direction for each of a plurality of time resources in a unit period, the configuration including configurations of the transmission direction different for the same time resource; and
control circuitry, which, in operation, controls transmission and reception based on the information on the configuration.

9. A communication method by a base station, comprising:
determining a configuration of a transmission direction for each of a plurality of time resources in a unit period, the configuration including configurations of the transmission direction different for the same time resource; and
transmitting a control signal including information on the configuration.

10. A communication method by a terminal, comprising:
receiving a control signal including information on a configuration of a transmission direction for each of a plurality of time resources in a unit period, the configuration including configurations of the transmission direction different for the same time resource; and
controlling transmission and reception based on the information on the configuration.
